**Europäisches Patentamt**

**European Patent Office**

**Office européen des brevets**

(19)

(11) Numéro de publication: **0 015 167**
**B1**

(12)

# FASCICULE DE BREVET EUROPEEN

(45) Date de publication du fascicule du brevet: **12.05.82**

(51) Int. Cl.³: **H 02 K 3/52**, H 02 K 15/02

(21) Numéro de dépôt: **80400023.0**

(22) Date de dépôt: **09.01.80**

(54) **Perfectionnement aux alternateurs de véhicules automobiles.**

(30) Priorité: **25.01.79 FR 7901872**

(43) Date de publication de la demande:
**03.09.80 Bulletin 80/18**

(45) Mention de la délivrance du brevet:
**12.05.82 Bulletin 82/19**

(84) Etats contractants désignés:
**DE GB IT**

(56) Documents cités:
**DE - A - 2 817 999**
**DE - C - 134 755**
**FR - A - 1 590 580**
**FR - A - 2 144 667**
**FR - A - 2 180 658**
**FR - A - 2 344 165**
**GB - A - 615 058**
**GB - A - 626 823**

(73) Titulaire: **DUCELLIER & Cie**
**Echat 950**
**F-94024 Créteil Cedex (FR)**

(72) Inventeur: **Dhuit, Bertrand**
**10 rue de l'Amiral Courbet**
**F-92270 Bois Colombes (FR)**

(74) Mandataire: **Habert, Roger**
**2, rue Boulle Echat 950**
**F-94024 Créteil Cedex (FR)**

Courier Press, Leamington Spa, England.

Perfectionnement aux alternateurs de véhicules automobiles

La présente invention concerne un perfectionnement aux alternateurs de véhicules automobiles, notamment aux alternateurs du type dont le rotor comporte deux roues polaires à griffes placées l'une en regard de l'autre et comportant chacune une moitié de ·noyau profilée, et dans lequel est prévue, entre les roues polaires à griffes, une bobine entre les joues de laquelle est bobiné une fil inducteur. Deux exemples de ce type sont decrits dans les documents FR—A—2 344 165 et FR—A—1 590 580.

Dans la réalisation connue, de telles roues polaires, le demi noyau comporte une dépouille de fabrication qui fait que, lorsque deux roues polaires sont assemblées avec la bobine du fil inducteur, ladit bobine n'a pas de surface d'appui dans sa partie médiane et se déforme, les spires du bobinage, à cet endroit, ont donc tendance à bouger entr'elles ce qui peut provoquer une rupture du fil inducteur et conséquemment un arrêt de fonctionnement de l'alternateur.

De plus, ces roues polaires étant assemblées sous une force relativement faible, l'entrefer résiduel entre les dux demi-noyaux face à face peut être important et diminuer le rendement d'un tel alternateur.

Il est connu, afin de réduire au maximum cet entrefer et d'assurer un appui à la bobine de fil inducteur dans sa partie médiane, d'assembler les roues polaires et la bobine de fil inducteur sous une très grande pression jusqu'à déformer l'arête de chaque demi-noyau, arête définie par la dépouille du demi-noyau et la face frontale dudit demi-noyau.

Sous l'effet de la très grande pression, la face frontale d'un des demi-noyaux vient en adhérence avec la face frontale de l'autre demi-noyau et la matière au niveau de chaque face est repoussée vers l'extérieur formant un bossage annulaire de dimensions telles à assurer l'appui nécessaire à la partie médiane de la bobine du fil inducteur.

Par une telle méthode il est obtenu, matériellement, un entrefer nul entre les deux demi-noyaux; mais le fait d'appliquer une très grande pression sur toute la face frontale de chaque demi-noyaux provoque une modification importante de la perméabilité magnétique de la matière de chaque demi-noyau sur une profondeur croissante de l'arête vers l'axe de rotation de la roue polaire ce qui revient à recréer artificiellement un entrefer et diminuer le rendement d'un tel alternateur.

La présente invention a pour but de remédier à un tel inconvénient et concerne à cet effet un perfectionnnement aux alternateurs de véhicules automobiles, notamment aux alternateurs du type dont le rotor comporte deux roues polaires à griffes placées l'une en regard de l'autre et comportant chacune une partie de noyau profilée, et dans lequel est prévue, entre les deux roues polaires à griffes et autour des parties de noyau, une bobine entre les joues de laquelle est bobiné un fil inducteur, perfectionnement caractérisé en ce que avant assemblage, la face frontale de l'une au moins des parties de noyau comporte, coaxialement une couronne périphérique de dimensions telles que, après assemblage sous l'effet d'une certaine pression axiale, elle se déforme radialement vers l'extérieur de la partie de noyau de manière à constituer un bossage annulaire apte à assurer un appui à la partie médiane de la bobine.

La description que va suivre en regard des schémas annexés fera mieux comprendre comment l'invention peut être réalisée.

La figure 1 représente un rotor d'alternateur selon l'invention avent assemblage.

La figure 2 représente ledit rotor après assemblage.

De façon connue un tel alternateur est constitué de deux roues polaires à griffes 1 et 2 comprenant chacune un demi-noyau 3 et 4 profilé, et d'une bobine 13 dans laquelle est bobiné le fil inducteur 14, maintenue autour des demi-noyaux 3 et 4 entre les roues polaires à griffes 1 et 2.

Chaque roue polaire 1 et 2 comprend un orifice central 11 et 12 dans lequel l'arbre 15 est monté.

De par la fabrication de telles roues polaires, la forme extérieure 5 et 6 du demi noyau est légèrement conique et de ce fait la bobine 13 ne repose pas en sa partie médiane.

Conformément à l'invention les parties frontales 9 et 10 de chaque demi-noyau 3 et 4 comportent une couronne annulaire 7 et 8 coaxiale avec l'ensemble de la roue polaire et du demi-noyau;

Lors de l'assemblage il est nécessaire de mettre en contact les faces frontales 9 et 10 des demi-noyaux 3 et 4 ofin d'éliminer au maximum l'entrefer entre ces deux faces frontales.

Pour ce faire les différents éléments constitutifs étant assemblés de manière à ce que les couronnes 7 et 8 soient en contact, l'ensemble roues polaires et bobine est soumis à une certaine pression.

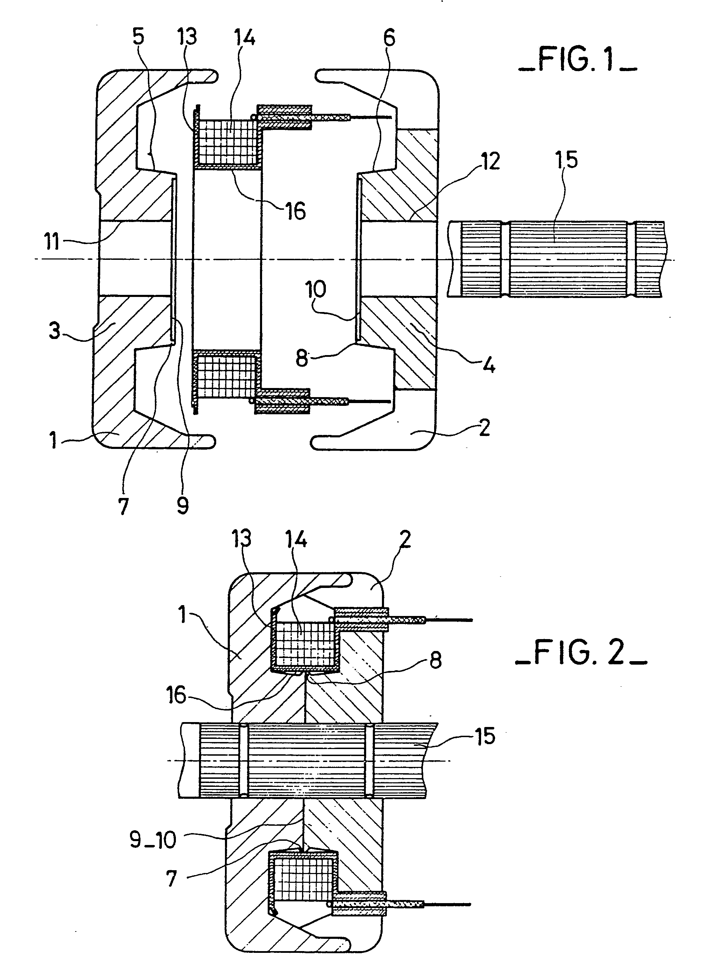

Sous l'action de cette pression d'une part les couronnes 7 et 8 se déforment vers l'extérieur (fig. 2) des demi-noyaux 3 et 4 et forment un bossage annulaire apte à assurer un appui à la partie médiane 16 de la bobine 14, et d'autre part les faces frontales 9 et 10 s'écrêtent supprimant au maximum l'entrefer entr'elles avec un minimum de modifications de la structure magnétique des demi-noyaux.

Il est ainsi obtenu un rotor où tous les éléments sont bien solidaires entr'eux, avec des entrefers minimum et avec des pertes de rendement, dûs à l'assemblage, très réduites.

Il est bien entendu que des modifications pourrant être apportées sans sortir pour cela du cadre de l'invention, la couronne pourra en effet n'être réalisée sur la face frontale que d'un seul demi-noyau ou se présenter d'une façon discontinue par une pluralité de bossages. De plus, une rainure pourra être réalisée sur la face frontale du demi-noyau au pied de ladite couronne, ceci permettant aux fibres de métal de n'être déformées que dans une zone désirée proche de la couronne et de favoriser l'épanouissement de cette couronne lors de l'assemblage.

## Revendications

1. Perfectionnement aux alternateurs de véhicules automobiles notamment aux alternateurs du type dont le rotor comporte deux roues polaires à griffes (1,2) placées l'une en regard de l'autre et comportant chacune une partie de noyau profilée (3,4), et dans lequel est prévue, entre les deux roues polaires à griffes et autour des parties de noyau, une bobine (13) entre les joues de laquelle est bobiné un fil inducteur (14), perfectionnement caractérisé en ce que, avant assemblage, la face frontale (9—10) de l'une au moins des parties de noyau (3 ou 4) comporte, coaxialement une couronne périphérique (7 ou 8) de dimensions telles que, après assemblage sous l'effet d'une certaine pression axiale, elle se déforme radialement vers l'extérieur de la partie de noyau de manière à constituer un bossage annulaire apte à assurer un appui à la partie médiane de la bobine (13).

2. Perfectionnement aux alternateurs selon la revendication 1, caractérisé en ce que la couronne périphérique (7 ou 8) située sur la face frontale d'au moins une des parties de noyau (3 ou 4) est discontinue et est constituée d'une pluralité de bossages.

## Claims

1. An improvement to motor vehicles alternators, particularly to alternators of the type of which the rotor includes two claw poles (1, 2) disposed opposite to each other and each including a shaped core part (3, 4), and in which is provided, between the two rotor claw poles and around the core parts, a winding support (13) between the cheeks of which is wound an inductor wire (14), the improvement being characterisied in that, before assembly, the end face (9—10) of at least one of the core parts (3 or 4) includes coaxially a peripheral ring (7 and 8) of dimensions such that, after assembly under the effect of a certain axial pressure, it deforms radially towards the exterior of the core part in such a manner as to constitute an annular boss adapted to ensure support for the medial portion of the winding support (13).

2. An improvement to alternators according to Claim 1, characterised in that the peripheral ring (7 or 8) situated on the end face of at least one of the core parts (3 or 4) is discontinuous and constituted by a plurality of bosses.

## Patentansprüche

1. Generator für Kraftfahrzeuge

— mit einem Rotor, der zwei Klauenpolräder (1, 2) beinhaltet, die einander gegenüberliegend angeordnet sind, und deren jedes ein profiliertes Kernteil (3, 4) umfaßt,
— sowie mit einer zwischen den beiden Klauenpolrädern angeordneten die genannten Kernteile umgreifenden Spule (13), zwischen deren Spulenflanschen eine Erregerwicklung aufgebracht ist,

dadurch gekennzeichnet, daß die Stirnseite (9—10) wenigstens eines Kernteiles (3 oder 4) vor dem Zusammenfügen eine koaxialen peripheren Kranz (7 oder 8) aufweist, der so dimensioniert ist, daß er sich nach dem Zusammenfügen unter der Wirkung eines axialen Druckes vorbestimmter Größe von dem Kernteil radial nach außen zu einer ringförmigen Wulst verformt, die eine Abstützung für den mittleren Teil der Spule (13) bildet.

2. Generator nach Anspruch 1, dadurch gekennzeichnet, daß der an der Stirnseite wenigstens eines der Kernteile gelegene periphere Kranz (7 oder 8) Unterbrechungen aufweist und aus einer Mehrzahl von Vorsprüngen besteht.

**0 015 167**

_FIG. 1_

_FIG. 2_

1